(19) 

Europäisches
Patentamt
European
Patent Office
Office européen
des brevets

(11) **EP 4 145 554 A1**

(12) **EUROPEAN PATENT APPLICATION**
published in accordance with Art. 153(4) EPC

(43) Date of publication:
**08.03.2023 Bulletin 2023/10**

(21) Application number: **21796336.2**

(22) Date of filing: **28.04.2021**

(51) International Patent Classification (IPC):
*H01M 4/13* (2010.01)     *H01M 4/139* (2010.01)
*H01M 4/62* (2006.01)     *H01G 11/42* (2013.01)
*H01M 10/052* (2010.01)

(52) Cooperative Patent Classification (CPC):
**H01G 11/42; H01M 4/13; H01M 4/139; H01M 4/62;
H01M 10/052;** Y02E 60/10

(86) International application number:
**PCT/JP2021/017081**

(87) International publication number:
**WO 2021/221129 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2020   JP 2020080240**

(71) Applicant: **Kuraray Co., Ltd.**
**Kurashiki-shi, Okayama 710-0801 (JP)**

(72) Inventors:
• **TACHIKAWA, Kengo**
  **Kurashiki-shi, Okayama 710-0801 (JP)**

• **TAKAYAMA, Mao**
  **Kurashiki-shi, Okayama 710-0801 (JP)**
• **KOBAYASHI, Shohei**
  **Kurashiki-shi, Okayama 710-0801 (JP)**
• **INUI, Yoshihisa**
  **Kurashiki-shi, Okayama 710-0801 (JP)**
• **NISHIMURA, Shushi**
  **Bizen-shi, Okayama 705-0025 (JP)**

(74) Representative: **Müller-Boré & Partner**
**Patentanwälte PartG mbB**
**Friedenheimer Brücke 21**
**80639 München (DE)**

(54) **ADDITIVE FOR POSITIVE ELECTRODE OF ELECTROCHEMICAL DEVICE, COMPOSITION FOR POSITIVE ELECTRODE OF ELECTROCHEMICAL DEVICE, POSITIVE ELECTRODE FOR ELECTROCHEMICAL DEVICE, AND ELECTROCHEMICAL DEVICE INCLUDING SAME**

(57)     The present invention relates to an additive for an electrochemical device positive electrode comprising a porous carbon material, wherein the porous carbon material has a pore volume of pores having a diameter of 2 nm or more of 0.25 cm$^3$/g or more, a pore volume of pores having a diameter of less than 2 nm of 0.5 cm$^3$/g or less, and an ash content of 0.5% by weight or less.

EP 4 145 554 A1

**Description**

Technical Field

The present application claims the priority of Japanese Patent Application No. 2020-080240 (filing date: April 30, 2020) under the Paris Convention, the entire contents of which are incorporated herein by reference.
The present invention relates to an additive for an electrochemical device positive electrode comprising a porous carbon material, and a composition for an electrochemical device positive electrode comprising the additive for an electrochemical device positive electrode. The present invention also relates to an electrochemical device comprising a positive electrode produced by using the composition for an electrochemical device positive electrode.

Background Art

The demand for electrochemical devices such as lithium ion secondary batteries, which are small in size, lightweight, have high energy density and can be repeatedly charged and discharged, is rapidly expanding by taking advantage of their characteristics. Lithium ion secondary batteries are used in fields such as mobile phones, laptops and electric vehicles because of their relatively high energy density. With the expansion and development of its applications, further improvements such as lower resistance, higher capacity as well as mechanical properties and productivity are required for these electrochemical devices.
The electrochemical devices such as lithium ion secondary batteries are being developed for the purpose of increasing the capacity, and in particular, the positive electrode material has a great influence on the capacity (miniaturization) of the battery, so there is an urgent need to increase its capacity and high performance. For example, in Patent Document 1, a positive electrode for a lithium secondary battery having excellent short-time output characteristics at a low temperature is studied. Further, in Patent Document 2, in a lithium secondary battery using a manganese-based positive electrode active material, a lithium secondary battery in which manganese ions are adsorbed and trapped in activated carbon is studied.
In Patent Documents 3 and 4, a lithium ion secondary battery capable of reducing decrease of battery capacity by removing water in the battery with a water adsorbent is studied.

PRIOR ART DOCUMENTS

PATENT DOCUMENTS

   [Patent Document 1] JP 4964404 B
   [Patent Document 2] JP 2012-059690 A
   [Patent Document 3] JP 2001-126766 A
   [Patent Document 4] JP 2014-026819 A

SUMMARY OF THE INVENTION

PROBLEMS TO BE SOLVED BY THE INVENTION

The technique described in Patent Document 1 indicates that the carbonaceous material needs to have a pore volume with 20 Å or more of 0.418 cc/g or more. However, formation of excessive mesopores is economically difficult since the yield of the activated carbon becomes low. Further, there is a problem that the carbonaceous material strongly adsorbs anions, and may thereby reduce the diffusivity of the ions. In the technique described in Patent Document 2, no consideration is given to the case where the activated carbon comprises other metals, for example, an alkaline earth metal such as calcium which may cause the gelation of a fluorine-based binder such as PVDF and significant decrease in coatability thereby. In addition, the effects of ash contents such as iron and nickel, which may cause short circuits, and easily react with lithium ions to cause an increase in irreversible capacity, have not been studied.
In the techniques described in Patent Documents 3 and 4, a water adsorbent provided inside the lithium ion secondary battery may become an unnecessary member after adsorbing water. That is, since the water adsorbent itself does not contribute to the improvement of the battery characteristics after adsorbing water, the unnecessary member continues to exist inside the battery, which may not be preferable from the viewpoint of improving the battery characteristics.
In view of the above problems, an object of the present invention is to provide

an additive for an electrochemical device positive electrode which can improve the conductivity of the positive electrode, can reduce the electrode resistance and can improve the lithium utilization efficiency, and
a composition for an electrochemical device positive electrode comprising the same.

Still another object of the present invention is to provide an electrochemical device comprising a positive electrode produced by using the above composition, which has excellent battery characteristics.

MEANS FOR SOLVING THE PROBLEMS

As a result of diligent studies by the present inventors, they have found that the above-mentioned problems can be solved by an additive for an electrochemical device positive electrode comprising a specific activated carbon, and have reached the present invention.
That is, the present invention encompasses the following aspects.

[1] An additive for an electrochemical device positive electrode comprising a porous carbon material, wherein the porous carbon material has a pore volume of pores having a diameter of 2 nm or more of 0.25 $cm^3$/g or more, a pore volume of pores having a diameter of less than 2 nm of 0.5 $cm^3$/g or less, and an ash content of 0.5% by weight or less.
[2] The additive for an electrochemical device positive electrode according to [1], wherein a specific surface area of the porous carbon material in accordance with a BET method is 300 to 1600 $m^2$/g.
[3] The additive for an electrochemical device positive electrode according to [1] or [2], wherein a powder resistivity of the porous carbon material is 0.60 Q-cm or less.
[4] The additive for an electrochemical device positive electrode according to any one of [1] to [3], wherein an average particle diameter of the porous carbon material is 2 $\mu$m to 20 $\mu$m.
[5] A composition for an electrochemical device positive electrode comprising the additive for an electrochemical device positive electrode according to any one of [1] to [4] and a positive electrode active material, wherein the content of the additive for an electrochemical device positive electrode is 10% by weight or less with respect to the total weight of the positive electrode active material.
[6] The composition for an electrochemical device positive electrode according to [5], further comprising a binder in an amount of 0.5 to 10% by weight with respect to the total solid content weight of the composition for an electrochemical device positive electrode.
[7] The composition for an electrochemical device positive electrode according to [5] or [6], further comprising a conductive material in an amount of 1 to 10% by weight with respect to the total solid content weight of the composition for an electrochemical device positive electrode.
[8] An electrochemical device comprising a positive electrode produced by using the composition for an electrochemical device positive electrode according to any one of [5] to [7].
[9] The electrochemical device according to [8], wherein the electrochemical device operates from 2 V to 5 V.
[10] A lithium ion secondary battery comprising a positive electrode produced by using the composition for an electrochemical device positive electrode according to any one of [5] to [7].

EFFECTS OF THE INVENTION

According to the present invention, it is possible to provide

an additive for an electrochemical device positive electrode which can improve the conductivity of the positive electrode, can reduce the electrode resistance and can improve the lithium utilization efficiency, and also
a composition for an electrochemical device positive electrode comprising the same. Further, it is possible to provide an electrochemical device comprising a positive electrode produced by using the above composition, which has excellent battery characteristics.

MODE FOR CARRYING OUT THE INVENTION

Hereinafter, one embodiment of the present invention is described in detail. However, this is presented as an example, which does not limit the invention and the invention is defined by the claims.

[Additive for Electrochemical Device Positive Electrode]

The additive for an electrochemical device positive electrode of the present invention comprises a porous carbon material having a pore volume of pores having a diameter of 2 nm or more of 0.25 $cm^3$/g or more, a pore volume of pores having a diameter less than 2 nm of 0.5 $cm^3$/g or less, and an ash content of 0.5% by weight or less. The additive for an electrochemical device positive electrode of the present invention is a porous carbon material having such specific pores and a small amount of ash, so that the porous carbon material does not only adsorb the metal eluted from the positive electrode to reduce the risks such as precipitations or short circuits on the negative electrode being the counter electrode, but can also suppress basicization which is the cause of poor coating during electrode preparation, and can contribute to the manufacturing stability of the electrodes. Further, it is possible to improve the battery characteristics (particularly, the reduction of the electrode resistance and the reduction of the irreversible capacity) of the electrochemical device produced by using the same.

(Porous Carbon Material)

The porous carbon material used in the present ivnention has a pore volume of pores having a diameter of 2 nm or more (mesopore volume) of 0.25 $cm^3$/g or more, which is measured in accordance with the pore distribution analysis by a DFT method by the nitrogen adsorption method. In the present invention, the pore volume of pores having a diameter of 2 nm or more (mesopore pore volume) can refer to the volume of pores having a pore size (pore diameter) of 2 nm or more and 50 nm or less, and can be determined by analyzing the adsorption isotherm obtained from the nitrogen adsorption method by the NL-DFT method. When the pore volume of pores having a diameter of 2 nm or more is included in this range, electrolyte retention ability is excellent, electrolyte mobility is also excellent, a sufficient electrolyte environment can be maintained around the positive electrode active material in the positive electrode, and a fast ion transfer environment can be provided. This can reduce the electrode resistance. In addition, by such electrolyte retention ability, the cycle life can be improved since the ion transfer environment around the active material is maintained so that the electrolyte is not depleted in the positive electrode while the charge and discharge cycle proceeds. Meanwhile, when the pore volume of pores having a diameter of 2 nm or more is smaller than the above range, the mobility of the electrolyte in the porous carbon material decreases, and when the electrolytic solution decomposes in the electrochemical device, gas clogging due to gas occurs. Not only is this undesirable because the mobility of the electrolyte is further reduced, but also it is undesirable because the expansion and contraction of the positive electrode material cannot be sufficiently reduced due to charging and discharging, and the electrode expands, leading to a reduction in its volumetric capacity as a real positive electrode. For these reasons, the pore volume of pores having a pore diameter of 2 nm or more is 0.25 $cm^3$/g or more, more preferably 0.27 $cm^3$/g or more, still more preferably 0.30 $cm^3$/g or more, still even more preferably 0.40 $cm^3$/g or more, particularly preferably 0.50 $cm^3$/g or more, and more particularly preferably 0.60 $cm^3$/g or more. If the pore volume of pores of 2 nm or more becomes larger, the electrolyte retention capacity and electrolyte mobility become excellent, so that the upper limit is not particularly limited, but it is preferably 2.00 $cm^3$/g or less, and more preferably 1.80 $cm^3$/g or less. The pore volume of pores having a diameter of 2 nm or more can be adjusted in the above range by appropriately adjusting, for example, the type of raw material of the porous carbon material; the type and/or amount of minerals to be dispersed; the type and amount of template and the like in the method for producing a porous carbon material described later.

The porous carbon material used in the present invention has a pore volume of pores having a dimeter of less than 2 nm (micropore pore volume) of 0.5 $cm^3$/g or less, which is measured in accordance with the pore distribution analysis by the DFT method by the nitrogen adsorption method. The pore volume of pores having a diameter of less than 2 nm is within the above range, and thereby a decrease in lithium ion efficiency due to trapping of lithium ions can be suppressed. From this viewpoint, the pore volume of pores having a diameter of less than 2 nm is preferably 0.49 $cm^3$/g or less, more preferably 0.48 $cm^3$/g or less, still more preferably 0.38 $cm^3$/g or less, still even more preferably 0.32 $cm^3$/g or less, particularly preferably 0.30 $cm^3$/g or less, and more particularly preferably 0.20 $cm^3$/g or less. The lower limit of the pore volume of pores having a diameter of less than 2 nm is not particularly limited, but it is preferably 0 $cm^3$/g or more, and more preferably 0.01 $cm^3$/g or more. The pore volume of pores having a diameter of less than 2 nm can be adjusted in the above range by appropriately adjusting the type of raw material of the porous carbon material; the type and/or amount of minerals to be dispersed; the type and/or amount of template and the like in the method for producing a porous carbon material described later.

The porous carbon material used in the present invention has an ash content of 0.5% by weight or less. The ash content is preferably 0.48% by weight or less, more preferably 0.46% by weight or less, still more preferably 0.25% by weight or less, still even more preferably 0.20% by weight or less, particularly preferably 0.15% by weight or less, and more particularly preferably 0.10% by weight or less. A heavy metal compound comprised in the ash content may diffuse, and may precipitate in the positive electrode during the discharge. Thus, the lower the content, the more preferable. The lower limit of the ash content is not particularly limited and may be 0% by weight or more. The ash content can be determined by measuring the ignition residue, for example, by the method described in Examples described later. The ash content that may be comprised in the porous carbon material includes nickel, iron, calcium, magnesium aluminum and the like. In particular, nickel is preferably 100 ppm or less, and more preferably 80 ppm or less. Iron is preferably 100 ppm or less, and more preferably 50 ppm or less. The ash content can also be determined by, for example, IPC emission spectroscopy method and the like. The ash content can be adjusted in the above range by appropriately adjusting the type of raw material of the porous carbon material; washing conditions (type and concentration of acid, time and the like) and the like in the method for producing a porous carbon material described later.

The porous carbon material used in the present invention preferably has a specific surface area in accordance with a BET method of 300 to 1600 $m^2/g$. If the specific surface area is too small, the electrolyte in the electrolytic solution cannot be sufficiently retained, and it is not possible to contribute to the resistance reduction, which may not be preferable. If the specific surface area is too large, the mechanical strength is lowered, and pulverization in the battery or release from the electrode during charging and discharging occurs resulting a short circuit causing the deterioration of battery performance, which may not be preferable. From this viewpoint, the specific surface area in accordance with a BET method is more preferably 320 to 1580 $m^2/g$, still more preferably 340 to 1550 $m^2/g$, still even more preferably 400 to 1500 $m^2/g$ or more, and particularly preferably 700 to 1200 $m^2/g$. The specific surface area can be adjusted in the above range by appropriately adjusting the type of raw material of the porous carbon material; the carbonization or calcination conditions (temperature, time, atmosphere and the like) in the method for producing a porous carbon material described later.

The porous carbon material used in the present invention preferably has a powder resistivity of 0.60 Ω·cm or less. The method for measuring the powder resistivity is described later in the Examples. If the powder resistivity is too high, the resistance of the battery increases, which not only reduces the utilization efficiency of lithium ions, but also decreases the charge and discharge speeds, which may cause practical problems. From this viewpoint, the powder resistivity is preferably 0.60 Ω·cm or less, and more preferably 0.55 Ω·cm or less. A powder resistivity of 0.50 Ω·cm or less is still more preferable, 0.40 Ω·cm or less is still even more preferable, 0.30 Ω·cm or less is particularly preferable, 0.20 Ω·cm or less is more particularly preferable, and 0.05 Ω·cm or less is extremely preferable. The lower limit of the powder resistivity is not particularly limited, but 0 Ω·cm or more is preferable, and 0.01 Ω·cm or more is more preferable. The powder resistivity can be adjusted in the above range by appropriately adjusting the type of raw material of the porous carbon material, the carbonization or calcination conditions (temperature, time, atmosphere and the like) and the like in the method for producing a porous carbon material described later.

In the porous carbon material used in the present invention, an average particle diameter determined by the laser scattering method is preferably 2 $\mu$m to 20 $\mu$m, more preferably 2.3 $\mu$m to 18 $\mu$m, and still more preferably 2.5 $\mu$m to 14$\mu$m. If it is within the above range, good coatability is obtained, which is preferable. Particles that are too large may be unfavorable since they prevent the conductivity in the positive electrode. Particles that are too small are not only economically unfavorable, but also cannot be suppressed by a binder or the like because they comprise fine powder, and are easily released from the inside of the electrode, which may cause deterioration of battery performance such as a short circuit, which may also be not preferable.

(Method for Producing Porous Carbon Material)

In the present invention, the method for obtaining a porous carbon material is not particularly limited as long as it can achieve a high mesopore ratio while constituting a high specific surface area. For example, it can be produced by (1) a method of dispersing an inorganic substance in a solution comprising an organic substance or in a liquid organic substance, and dissolving and removing the inorganic substance after carbonizing the organic substance, (2) a method of calcining an organic acid salt, (3) a method of calcining a polymer blend, (4) a method of using polymer fine particles with a uniform diameter as a template, and the like.

The carbonization and porosification methods are not particularly limited, but can be produced by publicly-known methods, such as a fixed bed method, moving bed method, fluidized bed method, multi-stage floor method and rotary kiln.

In the present invention, as a method for porosification, for example, as a method (1) above, considering the material properties that the porous material should have as a template, and the material properties of the obtained porous carbon material, it is believed that zeolite is particularly preferable as a porous material serving as a template. Zeolite is an aluminosilicate in which a part of the silicon (Si) in the silica structure is substituted with aluminum (Al), and has a structure with cations distributed within the structure since the backbone itself has a negative charge. Depending on the Si/Al molar ratio, the type and amount of cations, and the number of water molecules hydrated with cations, zeolites have a variety of crystal structures, such as those with two-dimensionally and three-dimensionally connected cavities, which are porous materials with a variety of cavity sizes. Among zeolites, FAU-type zeolites are preferable, and Y-type zeolites are more preferable among them.

For removal of the porous material, any method may be used as long as it can separate the porous carbon material produced. For example, the zeolite mentioned above can be dissolved by acid, and specifically, hydrochloric acid and hydrofluoric acid can be used to easily dissolve the zeolite.

In one preferred embodiment, the conditions of introducing a liquid organic substance (e.g., furfuryl alcohol, furfuryl aldehyde, and the like) into zeolite cavities, polymerizing the organic substance by heating this at 150 to 200°C, then carbonizing it by heating to 600 to 1200°C, and then dissolving and removing the zeolite are given.

The carbonization method is not particularly limited, but includes calcination under an atmosphere of inert gases such as nitrogen, carbon dioxide, helium, argon, carbon monoxide or fuel exhaust gas, a mixed gas of these inert gases, or a mixed gas of these inert gases as the main component and other gases.

Next, a composite of zeolite and carbide obtained by carbonization is then washed to form pores and reduce ash content. Washing/dissolving and removal can be performed by immersing the obtained carbide in a washing solution comprising an acid. Examples of the washing solution include a mineral acid or organic acid. Examples of the mineral acid include hydrochloric acid, sulfuric acid, hydrofluoric acid and the like. Examples of the organic acid include saturated carboxylic acids such as formic acid, acetic acid, propionic acid, oxalic acid, tartrate acid, and citric acid, aromatic carboxylic acids such as benzoic acid and terephthalic acid and the like. The acid used for the washing solution is preferably a mineral acid, more preferably hydrochloric acid or hydrofluoric acid from the viewpoint of washability. After washing with the acid, it is preferable to remove excess acid by washing with water and the like.

The washing solution can usually be prepared by mixing an acid and an aqueous solution. The aqueous solution includes water, a mixture of water and a water-soluble organic solvent and the like. The water-soluble organic solvent includes alcohols such as methanol, ethanol, propylene glycol, and ethylene glycol.

The acid concentration in the washing solution is not particularly limited, and may be appropriately adjusted according to the type of acid used. The acid concentration of the washing solution is preferably 0.01 to 6% by weight, more preferably 0.01 to 3.5% by weight, still more preferably 0.02 to 2.2% by weight, and still even more preferably 0.03 to 1.6% by weight based on the total amount of the washing solution. When the acid concentration in the washing solution is within the above range, impurities comprised in the porous carbon material can be efficiently removed, which is preferable.

The temperature of the washing solution on immersing the porous carbon material is not particularly limited, and is preferably 0 to 98°C, more preferably 10 to 95°C, and still more preferably 15 to 90°C. When the temperature of the washing solution on immersing the porous carbon material is within the above range, the washing can be performed in a practical time and with the load on the apparatus suppressed, which is desirable.

The method for washing the porous carbon material is not particularly limited as long as the porous carbon material can be immersed in the washing solution, and may be a method in which the porous carbon material is immersed in the washing solution with the washing solution being continuously added, retained for a predetermined time, and then withdrawn, or may be a method in which the porous carbon material is immersed in the washing solution, retained for a predetermined time, and then immersed in the fresh washing solution after deliquoring, thus repeating such immersing and deliquoring. In addition, it may be a method of updating the entire washing solution or a method of updating a part of the washing solution. The time for immersing the porous carbon material in the washing solution can be appropriately adjusted according to the acid used, the concentration of the acid, the treatment temperature and the like.

The washing time is not particularly limited, but is preferably 0.05 to 4 hours, and more preferably 0.1 to 3 hours, from the viewpoint of economic efficiency of the reaction facilities and structural retention of the porous carbon material.

The weight ratio between the washing solution and the porous carbon material when the porous carbon material is immersed in the washing solution may be appropriately adjusted according to the type, concentration, temperature and the like of the washing solution used. The weight of the porous carbon material to be immersed is usually 0.1 to 50% by weight, preferably 1 to 20% by weight, and more preferably 1.5 to 10% by weight with respect to the weight of the washing solution. Within the above range, impurities eluted into the washing solution are less likely to precipitate from the washing solution, it is easy to suppress the reattachment to the porous carbon material, and volumetric efficiency is appropriate, which is desirable from the viewpoint of economic efficiency.

The atmosphere for the washing is not particularly limited, and may be appropriately selected depending on the method used for the washing. In the present invention, the washing is usually carried out in an air atmosphere.

When a method (2) above is applied as the method for porosification in the present invention, the organic acid salt used as a raw material is not particularly limited. For example, citrates such as sodium citrate, potassium citrate, and lithium citrate; gluconates such as sodium gluconate, potassium gluconate, and lithium gluconate; sodium maleate, potassium maleate, lithium maleate, sodium malonate, potassium malonate lithium malonate, sodium succinate, potassium succinate, lithium succinate, sodium malate, potassium malate, lithium malate and the like can be used. These organic acid salts may be used alone or in combination of two or more. Sodium citrate is preferred for availability and economic efficiency.

The organic acid used as a raw material is not particularly limited, as long as the organic acid has a melting point that is not more than the decomposition temperature of an organic acid salt in a mixture with the organic acid salt. Examples of such substances may include, for example, citric acid, gluconic acid, maleic acid, malonic acid, succinic acid, malic acid, and the like. These organic acids can be used alone or in combination of two or more. Among these organic acids, citric acid is preferred in terms of availability, economic efficiency, and safety.

The mixing method of the organic acid salt and the organic acid is not particularly limited, but dry or wet mixing can be used.

In the case of dry mixing, by adding the organic acid to the organic acid salt, a mixture of them can be obtained. In this case, from the viewpoint of uniformly mixing the organic acid and the organic acid salt, it is preferable, for example, that the organic acid and the organic acid salt are ground with a mortar, or mixed while pulverizing them to powder in a ball mill.

In the case of wet mixing, for example, mixing can be performed by preparing a solution prepared by dissolving the organic acid salt in a solvent and then adding the organic acid to the solution. Mixing may also be performed by scattering (e.g., spray-scattering) the solution onto the organic acid. Mixing may also be performed by adding the organic acid salt to the solution prepared by dissolving the organic acid. After mixing, the solvent may be evaporated as necessary. By such a treatment, a mixture of saccharides and substances that produce ammonia gas can be obtained. The solvents used are not particularly limited, but include, for example, water, alcohol solvents (ethanol, methanol, ethylene glycol, isopropyl alcohol and the like), ether solvents (tetrahydrofuran, dimethoxyethane, 1,4-dioxane and the like), and mixtures thereof. These may be used alone or by mixing more than one solvent. Water is preferred as a solvent because it easily dissolves both organic acid salts and organic acids and easily simplifies the facilities.

The amount of the organic acid mixed with the organic acid salt (amount added) is preferably 10% by weight or more, more preferably 15% by weight or more, and still more preferably 20% by weight or more, preferably 55% by weight or less, more preferably 45% by weight or less, and still more preferably 30% by weight or less, with respect to the weight of the mixture of the organic acid salt and the organic acid. If the amount of the organic acid is less than the above lower limit, the mesopore volume percentage of the resulting porous carbons may become smaller. If the amount of the organic acid exceeds the above upper limit, the mesopore volume percentage of the resulting porous carbons may become smaller.

In the production method of the present invention, a carbide is obtained by heat treating the mixture obtained from the step of mixing the organic acid and the organic acid salt (hereinafter this process may be referred to as "step (I)"). Preferably, the mixture obtained from step (I) is subjected to heat treatment under an inert gas atmosphere, preferably at a temperature between 650 and 950°C, more preferably between 650 and 780°C, and still more preferably between 680 and 750°C, to obtain a carbide. Inert gases include, for example, nitrogen and argon. If the heat treatment temperature is lower than the above lower limit, the conductivity of the resulting porous carbon may become small. If the heat treatment temperature is higher than the above upper limit, the micropore volume of the resulting porous carbon increases and the mesopore volume may decrease, and in addition, metal compounds derived from the organic acid salt may be difficult to remove in the subsequent washing step. The heat treatment of the mixture obtained from step (I) may be performed in multiple stages, for example, after it is carbonized at 400 to 600°C, it may be preferably heat treated at 650 to 950°C, and more preferably 650 to 780°C. Carbides with more homogeneous physical properties can be obtained by performing the heat treatment in multiple stages.

The carbonized composite is washed to form pores and reduce ash content. Washing/dissolving and removal can be performed by immersing the resulting carbide in a washing solution comprising an acid. Examples of the washing solution include a mineral acid or organic acid. Examples of the mineral acid include hydrochloric acid and sulfuric acid. Examples of the organic acid include saturated carboxylic acids such as formic acid, acetic acid, propionic acid, oxalic acid, tartrate acid, and citric acid, aromatic carboxylic acids such as benzoic acid and terephthalic acid and the like. The acid used for the washing solution is preferably a mineral acid, more preferably hydrochloric acid from the viewpoint of washability. After washing with the acid, it is preferable to remove excess acid by washing with water and the like.

The washing solution can usually be prepared by mixing an acid and an aqueous solution. The aqueous solution includes water, a mixture of water and a water-soluble organic solvent and the like. The water-soluble organic solvent includes alcohols such as methanol, ethanol, propylene glycol, and ethylene glycol.

The acid concentration in the washing solution is not particularly limited, and may be appropriately adjusted according to the type of acid used. The acid concentration of the washing solution is preferably 0.01 to 3.5% by weight, more preferably 0.02 to 2.2% by weight, and still more preferably 0.03 to 1.6% by weight based on the total amount of the washing solution. When the acid concentration in the washing solution is within the above range, impurities comprised in the porous carbon material can be efficiently removed, which is preferable.

The temperature of the washing solution on immersing the porous carbon material is not particularly limited, and is preferably 0 to 98 °C, more preferably 10 to 95 °C, and still more preferably 15 to 90°C. When the temperature of the washing solution on immersing the porous carbon material is within the above range, the washing can be performed in a practical time and with the load on the apparatus suppressed, which is desirable.

The method for washing the porous carbon material is not particularly limited as long as the porous carbon material can be immersed in the washing solution, and may be a method in which the porous carbon material is immersed in the washing solution with the washing solution being continuously added, retained for a predetermined time, and then withdrawn, or may be a method in which the porous carbon material is immersed in the washing solution, retained for a predetermined time, and then immersed in the fresh washing solution after deliquoring, thus repeating such immersing and deliquoring. In addition, it may be a method of updating the entire washing solution or a method of updating a part of the washing solution. The time for immersing the porous carbon material in the washing solution can be appropriately adjusted according to the acid used, the concentration of the acid, the treatment temperature and the like.

The washing time is not particularly limited, but is preferably 0.05 to 4 hours, and more preferably 0.1 to 3 hours, from the viewpoint of economic efficiency of the reaction facilities and structural retention of the porous carbon material.

The weight ratio between the washing solution and the porous carbon material when the porous carbon material is immersed in the washing solution may be appropriately adjusted according to the type, concentration, temperature and the like of the washing solution used. The weight of the porous carbon material to be immersed is usually 0.1 to 50% by weight, preferably 1 to 20% by weight, and more preferably 1.5 to 10% by weight with respect to the weight of the washing solution. Within the above range, impurities eluted into the washing solution are less likely to precipitate from the washing solution, it is easy to suppress the reattachment to the porous carbon material, and volumetric efficiency is appropriate, which is desirable also from the viewpoint of economic efficiency.

The atmosphere for the washing is not particularly limited, and may be appropriately selected depending on the method used for the washing. In the present invention, the washing is usually carried out in an air atmosphere.

It is preferable that the porous carbon material thus obtained is then pulverized. The pulverization method is not particularly limited, but a publicly-known pulverization method, such as a ball mill, roll mill or jet mill, or a combination thereof can be employed.

In the present invention, the porous carbon material obtained by the pulverization may be classified and used. For example, porous carbon material particles having a narrow particle size distribution width can be obtained by excluding particles having a particle size of 1 $\mu$m or less. By removing such fine particles, it is possible to reduce the amount of the binder in the electrode configuration. The classification method is not particularly limited, but examples thereof include a classification using a sieve, wet classification and dry classification. The wet classifier includes a classifier using principles such as a gravity classification, inertial classification, hydraulic classification and centrifugal classification. The dry classifier includes a classifier using principles such as a sedimentation classification, mechanical classification and centrifugal classification. From the viewpoint of economic efficiency, it is preferable to use a dry classification device.

The obtained porous carbon material may be dried. Drying is an operation for removing the water and the like adsorbed on the porous carbon material. For example, by heating the porous carbon material, the water and the like adsorbed on the porous carbon material can be removed. In addition to or instead of heating, drying can be performed by means such as depressurization, heating under reduced pressure and freezing to remove water and the like adsorbed on the porous carbon material.

The drying temperature is preferably 75 to 330°C, more preferably 100 to 330°C, still more preferably 110 to 300°C, and still even more preferably 120 to 250°C from the viewpoint of removing the water adsorbed on the porous carbon material.

Although the drying time depends on the drying temperature to be employed, the drying time is preferably 0.1 hours or more, more preferably 0.5 hours or more, and still more preferably 1 hour or more, from the viewpoint of removing the water adsorbed on the porous carbon material. Further, from the viewpoint of economic efficiency, the drying time is preferably 24 hours or less, more preferably 12 hours or less, and still more preferably 6 hours or less.

Drying can be performed under a normal pressure or reduced pressure atmosphere. When the drying is carried out at normal pressure, it is preferable to carry out the drying under an atmosphere of an inert gas such as nitrogen gas or argon gas or an air atmosphere having a dew point of -20°C or lower.

The porous carbon material obtained as described above can be preferably used as an additive for an electrochemical device positive electrode of the present invention.

[Composition for Electrochemical Device Positive Electrode]

The composition for an electrochemical device positive electrode of the present invention comprises the above-mentioned additive for an electrochemical device positive electrode and a positive electrode active material. Further, the composition for an electrochemical device positive electrode of the present invention may optionally comprises other components other than the above.

The content of the additive for an electrochemical device positive electrode is preferably 10% by weight or less, more preferably 8% by weight or less, and still more preferably 6% by weight or less, with respect to the total weight of the positive electrode active material. This is because a high content of the additive for an electrochemical device positive electrode decreases the capacity due to a relative reduction in the weight of the positive electrode active material. In addition, if the content of the additive for an electrochemical device positive electrode is low, the effect of lowering the electrode resistance, which is the purpose of this invention, is insufficient, and thus, preferably 0.5% by weight or more, more preferably 1% by weight or more.

Further, the mixing ratio of the additive for an electrochemical device positive electrode and the positive electrode active material described later may be 1:99 to 10:90 in terms of weight ratio. When the mixing ratio of the additive for an electrochemical device positive electrode and the positive electrode active material is included in this range, a composition for an electrochemical device positive electrode excellent in both of the output characteristics and the capacity characteristics is obtained.

(Positive Electrode Active Material)

A positive electrode active material to be blended in the composition for an electrochemical device positive electrode is not particularly limited, and a known positive electrode active material can be used. Examples of the positive electrode active material include lithium-containing cobalt oxide ($LiCoO_2$), lithium manganate ($LiMn_2O_4$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, olivine-type lithium iron phosphate ($LiFePO_4$), olivine-type lithium manganese phosphate ($LiMnPO_4$), lithium excess spinel compounds represented by $Li_{1+x}Mn_{2-x}O_4$ (0<X<2), metal oxides such as Li $[Ni_{0.17}Li_{0.2}Co_{0.07}Mn_{0.56}]O_2$, and $LiNi_{0.5}Mn_{1.5}O_4$, sulfur, organic radicals such as a compound and polymer having a nitroxyl radical, a compound and polymer having an oxyradical, a compound and polymer having a nitrogen radical, and a compound and polymer having a fluvalene skeleton.

These can be used alone or in combination of two or more. Among the above, from the viewpoint of improving the battery capacity of the secondary battery, it is preferable to use a lithium-containing cobalt oxide ($LiCoO_2$); a lithium-containing nickel oxide ($LiNiO_2$); lithium-containing composite oxides of Co-Ni-Mn, such as $LiNi_{1/3}Co_{1/3}Mn_{1/3}O_2$, $LiNi_{0.5}Co_{0.2}Mn_{0.3}O_2$, and $LiNi_{0.8}Co_{0.1}Mn_{0.1}O_2$; lithium-containing composite oxides of Ni-Co-Al, such as $LiNi_{0.8}Co_{0.1}Al_{0.1}O_2$, $LiNi_{0.8}Co_{0.15}Al_{0.05}O_2$, as the positive electrode active material.

The particle size of the positive electrode active material is not particularly limited, and can be the same as that of the conventionally used positive electrode active material. Generally, the range of 0.1 $\mu$m to 40 $\mu$m, and more preferably 0.5 $\mu$m to 20 um is employed.

In the composition for an electrochemical device positive electrode of the present invention, the content of the positive electrode active material may be preferably 30 to 95% by weight, and more preferably 40 to 90% by weight with respect to the total solid content weight of the composition.

(Solvent)

The composition for an electrochemical device positive electrode of the present invention may comprise a solvent. As the solvent, for example, an organic solvent can be used, and among others, a polar organic solvent capable of dissolving a binder described later is preferable.

Specifically, as the organic solvent, acetonitrile, N-methylpyrrolidone, acetylpyridine, cyclopentanone, N, N-dimethylacetamide, dimethylformamide, dimethylsulfoxide, methylformamide, methylethylketone, furfural, ethylenediamine and the like can be used. Among them, N-methylpyrrolidone (NMP) is the most preferable from the viewpoint of the ease of handling, safety and ease of synthesis.

These organic solvents may be used alone or in combination of two or more.

The amount of the solvent used is such that the solid content concentration in the composition for an electrochemical device positive electrode is in the range of preferably 1 to 80% by weight, more preferably 5 to 70% by weight, and still more preferably 10 to 60% by weight. By setting the solid content concentration in the above range, the positive electrode active material, the additive for an electrochemical device positive electrode, and other components comprised therein can be uniformly dispersed, which is preferable.

(Binder)

It is preferable that the composition for an electrochemical device positive electrode of the present invention comprises a binder for satisfactorily adhering the positive electrode active material particles to each other and satisfactorily adhering the positive electrode active material to the current collector. As the examples of the binder, polyvinyl alcohol, carboxymethyl cellulose, hydroxypropyl cellulose, diacetyl cellulose, polyvinyl chloride, carboxylated polyvinyl chloride, polyvinyl fluoride, a polymer comprising ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon and the like may be used, but not limited thereto. These may be used alone or in combination of two or more.

In the composition for an electrochemical device positive electrode of the present invention, the content of the binder is preferably 0.5 to 10% by weight, and more preferably 1 to 7% by weight with respect to the total weight of the positive electrode in the composition.

(Conductive Material)

The composition for an electrochemical device positive electrode of the present invention may further comprise a conductive material in order to further enhance the conductivity of the positive electrode formed on the current collector. As the conductive material, any electronically conductive material that does not cause a chemical change in the constructed electrochemical device can be used. As specific examples of the conductive material, carbon-based materials such as natural graphite, artificial graphite, carbon black, acetylene black, Ketjen black, and carbon fiber, metal powders or metal fibers, such as those of copper, nickel, aluminum, and silver can be used. Alternatively, one kind or a mixture of two or more kinds of the conductive material such as polyphenylene derivatives may be used.

In the composition for an electrochemical device positive electrode of the present invention, the content of the conductive material is preferably 1 to 10% by weight, and more preferably 1 to 7% by weight, with respect to the total solid content weight of the positive electrode in the composition.

(Method for Producing Composition for Electrochemical

Device Positive Electrode)

As a method for producing the composition for an electrochemical device positive electrode, the composition can be produced by mixing the above-mentioned additive for an electrochemical device positive electrode, a positive electrode active material, and if necessary, a solvent and other components. The mixing method is not particularly limited, and for example, a general mixing device such as a disper, mill, or kneader can be used. For example, it is preferable to stir it for 20 minutes or more and 120 minutes or less.

The mixing temperature is not particularly limited, but the mixing is carried out, for example, in the range of 0°C to 160°C, and more preferably in the range of 20°C to 80°C. If the temperature is too low, the viscosity is high and coating cannot be performed, which is not preferable. If the temperature is too high, it is not preferable from the viewpoint of the safety such as volatilization of the organic solvent and the accompanying viscosity changes, and equipment operability.

[Electrochemical Device]

The composition for an electrochemical device positive electrode according to such an embodiment of the present invention may be usefully used for an electrochemical device. The present invention also encompasses an electrochemical device comprising a positive electrode produced by using the above-mentioned composition for an electrochemical device positive electrode. In the electrochemical device of the present invention, the conductivity of the positive electrode is improved and the electrode resistance can be reduced by comprising the above-mentioned additive for an electrochemical device positive electrode. In addition, the lithium utilization efficiency can be improved and the irreversible capacity can be reduced. It is preferable that the electrochemical device of the present invention operates from 2V to 5V, and examples thereof include a lithium ion secondary battery or a capacitor and the like.

For example, when the electrochemical device of the present invention is a lithium ion secondary battery, the lithium ion secondary battery comprises a positive electrode, a negative electrode and an electrolyte.

(Positive Electrode)

The positive electrode is produced by using the composition for an electrochemical device positive electrode of the present invention, and comprises a current collector and positive electrode active material layer. The positive electrode active material layer is formed by applying the composition for an electrochemical device positive electrode of the present invention to the current collector.

The method for applying the composition for an electrochemical device positive electrode on the current collector is not particularly limited, and a publicly-known method can be used. Specifically, as a coating method, a doctor blade method, dip method, reverse roll method, direct roll method, gravure method, extrusion method, brush coating method and the like can be used. At this time, the composition for an electrochemical device positive electrode may be applied to only one side of the current collector, or may be applied to both sides. The thickness of a composition film on the current collector after application and before drying can be appropriately set according to the thickness of the positive electrode active material layer obtained by drying.

As a current collector to which the composition for an electrochemical device positive electrode is applied, a material having electrical conductivity and electrochemical durability is used. Specifically, as the current collector, a current collector comprising aluminum or an aluminum alloy may be used. At this time, aluminum and an aluminum alloy may be used in combination, or different types of aluminum alloys may be used in combination. Aluminum and an aluminum alloy are excellent collector materials since they have heat resistance and are electrochemically stable.

The method for drying the composition for an electrochemical device positive electrode on the current collector is not particularly limited, and a publicly-known method can be used. Examples include drying by warm air, hot air or low-humidity air, vacuum drying and drying methods by irradiation with infrared rays or electron beams. By drying the composition for an electrochemical device positive electrode on the current collector in this way, a positive electrode active material layer is formed on the current collector, and a positive electrode comprising the current collector and the positive electrode active material layer can be obtained.

In particular, in order to maintain the metal trapping force of the added porous carbon material, it is preferable to sufficiently perform the drying step at the time of producing the positive electrode, and it is preferable to perform the drying to the extent that the current collector (for example, aluminum foil) is not affected and the water adsorbed on the surface of the positive electrode active material and the porous carbon material can be volatilized. Preferably, the drying step is performed at a drying temperature of 75°C or higher and 180°C or lower, and more preferably 100°C or higher and 160°C or lower under atmospheric pressure or reduced pressure for a time in the range of 1 hour to 12 hours.

After the drying step, the positive electrode active material layer may be subjected to a pressurizing treatment by using a metallic mold press, roll press and the like. The pressurizing treatment can improve the adhesion between the positive electrode active material layer and the current collector.

(Negative Electrode)

The negative electrode comprises a current collector and a negative electrode active material layer formed on the current collector, and the negative electrode active material layer comprises a negative electrode active material. The process for producing a negative electrode is a process widely known in the art.

The negative electrode active material comprises a substance capable of reversibly intercalating/deintercalating the lithium ions, lithium metal, lithium metal alloy, substance capable of being doped and de-doped with lithium or transition metal oxide.

As the substance capable of reversibly intercalating/deintercalating the lithium ions, a crystalline carbon, amorphous carbon, or both of them may be used. Examples of the crystalline carbon include graphite such as amorphous, plate-like, scaly, spherical or fibrous natural graphite or artificial graphite, and examples of the amorphous carbon include soft carbon or hard carbon, mesophase-pitch carbide, calcined coke and the like.

As the lithium metal alloy, an alloy of lithium and a metal selected from the group consisting of Na, K, Mg, Ca, Sr, Si, Sb, In, Zn, Ge, Al and Sn may be used.

The substance capable of being doped and de-doped with lithium includes Si, an alloy such as SiMg, $SiO_x$ (0<x<2), Sn, $SnO_2$ and the like.

The content of the negative electrode active material in the negative electrode active material layer may be 70% by weight to 100% by weight with respect to the total weight of the negative electrode active material layer. The negative electrode active material layer may be one consisting of the negative electrode active material.

The negative electrode active material layer may also comprise a binder, and may optionally further comprise a conductive material. The content of the binder in the negative electrode active material layer may be 1% by weight to 5% by weight with respect to the total weight of the negative electrode active material layer. When the conductive material is further comprised, 80% to 98% by weight, preferably 90% by weight to 98% by weight of the negative electrode active material, 1% by weight to 10% by weight of the binder and 1% by weight to 10% by weight of the conductive material may be used.

The binder plays a role of satisfactorily adhering the negative electrode active material particles to each other and satisfactorily adhering the negative electrode active material to the current collector. As the binder, a water-insoluble binder, water-soluble binder or combination thereof may be used.

The water-insoluble binder includes polyvinyl chloride, carboxylated polyvinyl chloride, polyvinyl fluoride, polymers comprising ethylene oxide, polyvinylpyrrolidone, polyurethane, polytetrafluoroethylene, polyvinylidene fluoride, polyethylene, polypropylene, polyamideimide, polyimide or a combination thereof.

The water-soluble binder includes styrene-butadiene rubber, acrylated styrene-butadiene rubber, polyvinyl alcohol, sodium polyacrylate, copolymers of propylene and an olefin having 2 to 8 carbon atoms, copolymers of (meth) acrylic acid and (meth) acrylic acid alkyl esters or combinations thereof.

When a water-soluble binder is used as the negative electrode binder, a cellulose-based compound capable of imparting viscosity may be further used as a thickener. The cellulose-based compound includes carboxymethyl cellulose, hydroxypropyl methyl cellulose, methyl cellulose and alkali metal salts thereof, and the content of such thickener may be 0.1 part by weight to 100 parts by weight with respect to 100 parts by weight of the binder.

The conductive material is used to impart the conductivity to an electrode, and any electronic conductive material that does not cause a chemical change in a constituted battery can be used, and as an example thereof, carbon-based materials such as natural graphite, artificial graphite, carbon black, acetylene black, Ketjen black and carbon fiber; metal-based materials such as metal powders or metal fibers, such as those of copper, nickel, aluminum, and silver; conductive polymers such as polyphenylene derivatives; or conductive materials comprising mixtures of them may be used.

As the current collector, the substance selected from the group consisting of copper foil, nickel foil, stainless steel foil, titanium foil, nickel foam, copper foam, a polymer substrate coated with a conductive metal, and a combination thereof may be used.

(Electrolyte)

The electrolyte preferably comprises at least a non-aqueous organic solvent and a lithium salt.

The non-aqueous organic solvent acts as a medium through which ions involved in the electrochemical reaction of the battery can move.

As the non-aqueous organic solvent, a carbonate-based, ester-based, ether-based, ketone-based, alcohol-based, or non-protonic solvent may be used. As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethylcarbonate (EMC), ethylene carbonate (EC), propylene carbonate (PC), butylene carbonate (BC) and the like may be used, and as the ester-based solvent, n-methyl acetate, n-ethyl acetate, n-propyl acetate, dimethylacetate, methylpropionate, ethylpropionate, $\gamma$-butyrolactone, decanolide, valerolactone, mevalonolactone, caprolactone and the like may be used. As the ether, dibutyl ether, tetraglyme, diglyme, dimethoxyethane, 2-methyltetrahydrofuran, tetrahydrofuran and the like may be used, and as the ketone-based solvent, cyclohexanone and the like may be used. Further, as the alcohol-based solvent, ethyl alcohol, isopropyl alcohol and the like may be used, and as the non-protonic solvent, nitriles such as R-CN (wherein, R is a linear, branched or ring-structured hydrocarbon group having 2 to 20 carbon atoms, which may comprise a double bond, aromatic ring or ether bond), amides such as dimethylformamide, dioxolanes such as 1,3-dioxolane, sulfolans and the like may be used.

The non-aqueous organic solvent may be used alone or in combination of two or more. When two or more of non-aqueous organic solvents are mixed and used, the mixing ratio may be appropriately adjusted according to the target battery performance.

Further, in the case of the carbonate-based solvent, it is preferable to use a mixture of cyclic carbonate and chain carbonate. In this case, when the cyclic carbonate and chain carbonate are mixed and used in a volume ratio of 1:1 to 1:9, the performance of the electrolytic solution may be shown to be more superior.

The lithium salt is dissolved in an organic solvent and acts as a source of lithium ions in the battery to enable the basic operation of a lithium ion secondary battery, and is a substance that plays a role to promote the movement of lithium ions between a positive electrode and negative electrode. Typical examples of such lithium salts include, for example, $LiPF_6$, $LiBF_4$, $LiSbF_6$, $LiAsF_6$, $LiCF_3SO_3$, $LiN(SO_2C_2F_5)_2$, $Li(CF_3SO_2)_2N$, $LiC_4F_9SO_3$, $LiClO_4$, $LiAlO_4$, $LiAlCl_4$, $LiN(C_xF_{2x+1}SO_2)(C_yF_{2y+1}SO_2)$ (wherein, x and y are natural numbers), LiCl, LiI and $LiB(C_2O_4)_2$ (lithium bisoxalatoborate (LiBOB)) and the like. These may be used alone or by mixing two or more. It is preferred that the concentration of the lithium salt used is in the range of 0.1 to 2.0 M. If the concentration of the lithium salt is less than 0.1 M, the conductivity of the electrolyte tends to be low and the electrolyte performance tends to deteriorate, and if the concentration of the lithium salt exceeds 2.0 M, the viscosity of the electrolyte increases and the mobility of lithium ions tends to decrease.

The electrolyte may further comprise a vinylene carbonate-based or ethylene carbonate-based compound as a life improving agent to improve the battery life.

Representative examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate and the like. When such a life improving agent is further used, the used amount may be appropriately adjusted.

In the lithium ion secondary battery of the present invention, a separator may be present between a positive electrode and negative electrode. As such a separator, polyethylene, polypropylene, polyvinylidene fluoride, or a multilayer film having two or more layers thereof may be used, and a mixed multilayer film, such as a two-layer separator of polyethylene/polypropylene, a three-layer separator of polyethylene/polypropylene/polyethylene, or a three-layer separator of polypropylene/polyethylene/polypropylene may be used.

[Examples]

Hereinafter, examples and comparative examples will be described. However, the following examples are merely one example, and the concepts of the present invention are not limited to the following examples.

(Specific Surface Area and Pore Volume by Nitrogen Adsorption BET Method)

An approximate equation derived from a BET equation is described below.

[Math. 1]

$$p/\left[v(p_0-p)\right] = (1/v_m c) + \left[(c-1)/v_m c\right](p/p_0)$$

By using the approximate equation, $v_m$ was obtained by substituting the actually measured adsorption amount (v) at a predetermined relative pressure (p/p$_0$) by a multi-point method according to nitrogen adsorption at a liquid nitrogen temperature, and the specific surface area (SSA: in m$^2$/g) of a sample was calculated by the following equation.

[Math. 2]

$$\text{Specific surface area} = \left(\frac{v_m N a}{22400}\right) \times 10^{-18}$$

In the equation, $v_m$ is the adsorption amount (cm$^3$/g) required for forming a monomolecular layer on a sample surface, v is the actually measured adsorption amount (cm$^3$/g), p$_0$ is the saturated vapor pressure, p is the absolute pressure, c is the constant (reflecting the adsorption heat), N is the Avogadro's number $6.022 \times 1023$, and a (nm$^2$) is the area occupied by adsorbate molecules on the sample surface (molecular occupied cross-sectional area).

Specifically, the amount of nitrogen adsorption to the carbon material at the liquid nitrogen temperature was measured by using "Autosorb-iQ-MP" manufactured by Quantachrome as follows. After the carbon material serving as a measurement sample was filled in a sample tube with the sample tube cooled to -196°C, the pressure was once reduced, and nitrogen (purity: 99.999%) was then adsorbed to the measurement sample at a desired relative pressure. The adsorbed gas amount v was defined as the amount of nitrogen adsorbed to the sample when the equilibrium pressure was reached at each desired relative pressure.

The adsorption isotherm obtained from the measurement of the nitrogen adsorption amount was analyzed by the NL-DFT method, and the volume of pores having a pore size (pore diameter) of less than 2 nm and the volume of pores having a pore size (pore diameter) of 2 nm or more and 50 nm or less are calculated as the micropore volume and the mesopore volume, respectively.

(Average Particle Diameter by Laser Scattering Method)

The average particle diameter (particle size distribution) of the carbon material was measured by the following method. The sample was put into an aqueous solution comprising 5% by weight of surfactant ("Toriton X100" manufactured by Wako Pure Chemical Industries, Ltd.), treated by an ultrasonic cleaner for 10 minutes or more, and dispersed in the aqueous solution. The particle size distribution was measured by using this dispersion. Particle size distribution measurement was performed by using a particle diameter/particle size distribution measuring device ("Microtrac MT3300 EXII" manufactured by MicrotracBEL). D50 is the particle diameter at which the cumulative volume is 50%, and this value was used as the average particle diameter.

(Ash Content Measurement Method)

The weight of an alumina crucible that was dummy heated at 900°C and allowed to cool in a desiccator comprising silica gel is measured. After vacuum drying for 8 to 10 hours in a constant temperature dryer with the temperature adjusted to 120°C, 20 g of a carbon material that was allowed to cool in the desiccator comprising silica gel as a desiccant was placed in the alumina crucible with a volume of 50 ml, and the crucible + carbon material weight was accurately measured to 0.1 mg. The alumina crucible comprising the sample was placed in an electric furnace, and the temperature was raised to 200°C in 1 hour with dry air introduced into the electric furnace at 20 L/min. Further, the temperature was raised to 700°C over 2 hours, kept at 700°C for 14 hours, and the sample was ashed. After completion of ashing, the crucible was allowed to cool in the desiccator comprising silica gel, the crucible + ash weight was accurately measured to 0.1 mg, and the ash content was calculated from the following formula.

[Math. 3]

Ash content (weight %) = {(crucible + ash weight) (crucible weight) / (crucible + carbon material weight) - (crucible weight)} × 100

(Measurement of Powder Resistivity)

The powder resistivity of the carbon material was measured using a powder resistivity measurement unit "MCP-PD51" manufactured by Mitsubishi Chemical Analytec Inc. To measure the resistivity, using a sample in an amount such that the thickness of carbon material pellets became 3.5 to 4.5 mm when a load of 64 MPa was applied, the resistivity of the carbon material powder was measured with the load being applied.

(Composition for Lithium Ion Secondary Battery Positive Electrode)

30 parts by weight of N-methylpyrrolidone solution in which 3 parts by weight of polyvinylidene fluoride (KF Polymer 7200 manufactured by KUREHA CORPORATION) is dissolved, 93 parts by weight of $LiNi_{1/3}Co_{1/3}Mn_{1/3}O_2$ ("Cell Seed C-5H" manufactured by NIPPON CHEMICAL INDUSTRIAL CO., LTD.) as a positive electrode active material, 2 parts by weight of acetylene black ("Denka Black" manufactured by Denka Company Limited) as a conductive material, and 2 parts by weight of a carbon material produced in Examples and Comparative Examples described later were added and mixed, the mixture was stirred and dispersed with a homomixer (4500 rpm) manufactured by PRIMIX Corporation, while appropriately adding N-methylpyrrolidone so that the solid content concentration of the composition became 50% by weight to obtain a composition for a lithium ion secondary battery positive electrode.

(Lithium Ion Secondary Battery Positive Electrode)

The above composition for a lithium ion secondary battery positive electrode was coated onto an aluminum foil ("1N30-H", manufactured by Fuji Impex Corp.) as a current collector by using a bar coater ("T101", manufactured by Matsuo Sangyo Co., Ltd.), and dried by a hot air drier (manufactured by Yamato Scientific Co., Ltd.) at 80°C for 30 minutes. After primary drying, rolling treatment was performed by using a roll press (manufactured by Hohsen Corp.). Then, after punching it through as a lithium ion secondary battery positive electrode ($\varphi$ 14 mm), a lithium ion secondary battery positive electrode was produced by secondary drying under a reduced pressure condition at 120°C for 3 hours. The water content at this time was measured by taking the produced and dried electrode ($\varphi$ 14 mm), heating it to 250°C by a Karl Fischer (manufactured by Mitsubishi Chemical Analytec Inc.) and measuring the water content under a nitrogen stream. The water content was controlled to be 20 ppm or less so that the added carbon material could exert the action other than water absorption.

(Preparation of Lithium Ion Secondary Battery)

The above lithium ion secondary battery positive electrode was transferred to a glove box (manufactured by Miwa Manufacturing Co., Ltd.) in an argon gas atmosphere. For a negative electrode, a laminate consisting of a metal lithium foil (thickness 0.2 mm, $\varphi$16 mm) as a negative electrode active material layer and a stainless steel foil (thickness 0.2 mm, $\varphi$17 mm) as a current collector was used. In addition, a polypropylene-based (cell Guard #2400, manufactured by Polypore Co., Ltd.) separator was used, and as an electrolyte, a mixed solvent system of lithium hexafluorophosphate ($LiPF_6$) in which ethylene carbonate (EC) and ethylmethyl carbonate (EMC) were added with vinylene carbonate (VC) ($1M-LiPF_6$, EC/EMC = 3/7 volume%, VC 2 weight %) was used and injected to produce a coin-type lithium ion secondary battery (2032 type).

(Measurement of Electrode Expansion Ratio)

The thickness of the electrode during preparation of the positive electrode was measured at three points with a micrometer and the average value was defined as the initial electrode thickness. After a charge-discharge test, the measured battery was disassembled, and the electrode thickness was measured again at three points, and the average value was defined as the electrode thickness after charge-discharge, and (after charge-discharge - initial value)/initial value x 100 was defined as the electrode expansion ratio.

[Example 1]

10 g of Na-Y zeolite powder (Si/Al=2/4, manufactured by UOC, Inc., US) dried at 150°C was placed in a 300-mL three-necked glass separable flask, depressurized together with the vessel, then 17 g of furfuryl alcohol (manufactured by Wako Pure Chemical Industries, Ltd.) was added to such an extent that the zeolite was immersed, and impregnated with stirring. Thereafter, the furfuryl alcohol-impregnated zeolite was recovered by filtration, and excess furfuryl alcohol was removed. Next, the furfuryl alcohol-impregnated zeolite was heat-treated at 150°C for 8 hours in a nitrogen stream to polymerize the furfuryl alcohol impregnated into the cavities. After cooling to room temperature, the resulting composite of the zeolite-furfuryl alcohol polymer was placed in a quartz reaction tube, the temperature was raised at 10°C/min to 900°C in a nitrogen stream while flowing 5L/min of nitrogen, followed by treating for 4 hours at the same temperature for carbonization. The produced zeolite-carbon composite was cooled to room temperature, added to and immersed in 300 mL of 5% by weight of hydrofluoric acid water to dissolve the zeolite. Furthermore, after deliquoring the hydrofluoric acid water, the resulting product was treated with 500 mL of 1 N hydrochloric acid to dissolve and remove the zeolite to recover only carbons. This granular material was pulverized to an average particle diameter of 6 $\mu$m to obtain the carbon material and various properties thereof were measured.

[Example 2]

15 g of trisodium citrate dihydrate (manufactured by Wako Pure Chemical Industries, Ltd.) and 5 g of citric acid (manufactured by Wako Pure Chemical Industries, Ltd.) (25% by weight to the mixture of trisodium citrate and citric acid) were mixed in a mortar. The resulting mixture was heated to 700°C in a nitrogen gas atmosphere. At this time, the heating rate to 700°C was set to 5°C/min. Carbides were then obtained by heat treatment at 900°C for 60 minutes under nitrogen gas stream. Thereafter, they were washed with 0.1 mol/L hydrochloric acid at 80°C for 30 min, followed by water washing. Acid washing and water washing were repeatedly performed three times, followed by hot air drying at 80°C to obtain porous carbons. This granular material was pulverized to an average particle diameter of 6 $\mu$m to obtain the carbon material and various properties thereof were measured.

[Example 3]

The same procedure as in Example 1 was performed except that furfuryl alcohol in Example 1 was replaced with furufural (manufactured by Wako Pure Chemical Industries, Ltd.).

[Example 4]

10 g of Na-Y type zeolite powder (Si/Al=2/4, manufactured by UOC, Inc., US) dried at 150°C was placed in a 300-mL three-necked glass separable flask, depressurized together with the vessel, then 17 g (corresponding to a solid content) (85 g of aqueous solution because of a 20 weight % of aqueous solution) of a resole resin (manufactured by Aica Kogyo Co., Ltd.) that was a phenol-formalin resin, was added to such an extent that the zeolite was immersed, and impregnated with stirring. Thereafter, excess water was removed under a reduced pressure of 21 mmHg. Next, the resole resin-impregnated zeolite was heat-treated at 150°C for 8 hours in a nitrogen stream to polymerize and cure the resole resin impregnated into the cavities. After cooling to room temperature, the resulting cured composite of the zeolite-resole resin was placed in a quartz reaction tube, and the temperature was raised at 10°C/min to 900°C in a nitrogen stream, while flowing 5L/min of nitrogen, followed by treating for 4 hours at the same temperature for carbonization. The produced zeolite-carbon composite was cooled to room temperature, added to and immersed in 300 mL of 5% by weight of hydrofluoric acid water to dissolve the zeolite. Furthermore, after deliquoring the hydrofluoric acid water, the resulting product was treated with 500 mL of 1 N hydrochloric acid to dissolve and remove the zeolite to recover only carbons. This granular material was pulverized to an average particle diameter of 6 $\mu$m to obtain the carbon material and various properties thereof were measured.

[Example 5]

The same procedure as in Example 2 was performed except that 20 g of trisodium citrate was used as a raw material without use of citric acid in Example 2.

[Comparative Example 1]

The same procedure as in Example 1 was performed except that hydrochloric acid washing was not performed in Example 1.

[Comparative Example 2]

The same procedure as in Example 2 was performed except that the carbonization temperature was set to 600°C in Example 2.

[Comparative Example 3]

The same procedure as in Example 4 was performed except that the carbonization temperature was set to 600°C in Example 4.

[Comparative Example 4]

100 g (100 parts by mass in terms of dry solid content) of pine sawdust (moisture percentage 48% by mass) was mixed with 97.8 g [160 parts by mass in terms of dry solid content (concentration 100% by mass)] of a phosphoric acid solution (concentration 85% by mass) [mass ratio of phosphoric acid to sawdust (phosphoric acid / sawdust) = 1.6]. The mixture was heated with stirring in a circulation type dryer set at 175°C.
The resulting mixture was fed into a rotary kiln and oxidized by heating to 300°C under air at 4°C/min and holding it for 3 hours.
Next, the circulating gas was switched from air to nitrogen, and the temperature was raised to 500°C under nitrogen at 4°C/min and held for 2 hours for calcination.
The pellets after calcination were washed with water and dried to obtain activated carbon. The obtained activated carbon was made into an average particle diameter of 5.6 $\mu$m by a ball mill pulverizer.

[Table 1]

| | Specific surface area | Pore volume less than 2 nm | Pore volume 2 nm or more | Ash content | Powder resistivity |
|---|---|---|---|---|---|
| | $m^2/g$ | $cm^3/q$ | $cm^3/g$ | weight % | $\Omega \cdot cm$ |
| Example 1 | 1503 | 0.32 | 1.56 | 0.22 | 0.22 |
| Example 2 | 391 | 0.13 | 0.30 | 0.26 | 0.041 |
| Example 3 | 1245 | 0.39 | 0.39 | 0.18 | 0.31 |
| Example 4 | 1012 | 0.33 | 0.45 | 0.05 | 0.41 |
| Example 5 | 662 | 0.22 | 0.56 | 0.09 | 0.066 |
| Comparative Example 1 | 1422 | 0.29 | 1.44 | 0.56 | 0.33 |
| Comparative Example 2 | 412 | 0.55 | 0.22 | 0.08 | 0.72 |
| Comparative Example 3 | 714 | 0.58 | 0.27 | 0.08 | 0.81 |
| Comparative Example 4 | 1220 | 0.32 | 0.47 | 4.11 | 0.66 |

[Examples 6 to 10 and Comparative Examples 5 to 8]

Using the carbon materials obtained in Examples 1 to 5 and Comparative examples 1 to 4, lithium ion secondary batteries were produced according to the above description. For each lithium ion secondary battery obtained, a charge-discharge test was performed using a charge-discharge tester ("TOSCAT" manufactured by TOYO SYSTEM CO., LTD.)

after measuring the DC resistance value before the initial charge. As for the DC resistance, the resistance value when 0.5 mA was passed for 3 seconds was measured. Lithium doping was performed at a rate of 70 mA/g with respect to the weight of the active material, and doping was performed until 1 mV relative to the lithium potential was reached. A constant voltage of 1 mV relative to the lithium potential was further applied for 8 hours, and the doping was terminated thereafter. The capacity (mAh/g) at this point was defined as the charge capacity. Subsequently, de-doping was performed at a rate of 70 mA/g with respect to the weight of the active material until 2.5 V relative to the lithium potential was reached. The capacity discharged at this point was defined as the discharge capacity. The percentage of discharge capacity/charge capacity was defined as the charge-discharge efficacy (initial charge-discharge efficiency) and served as an index of the utilization efficiency of lithium ions in the battery. In addition, the irreversible capacity was calculated by subtracting the discharge capacity from the charge capacity. The results obtained are shown in Table 2. Note that "-" in the table indicates that no measurement was performed.

[Table 2]

| | Additive for positive electrode | Charge capacity | Discharge capacity | Irreversible capacity | Initial charge/ discharge efficiency | DC resistance | Electrode expansion rate |
|---|---|---|---|---|---|---|---|
| | | mAh/g | mAh/g | mAh/g | % | ($\Omega$) | % |
| Example 6 | Example 1 | 194 | 163 | 31 | 84.1 | 163 | 1.4 |
| Example 7 | Example 2 | 197 | 165 | 32 | 83.8 | 131 | - |
| Example 8 | Example 3 | 191 | 163 | 28 | 85.1 | 154 | - |
| Example 9 | Example 4 | 185 | 164 | 21 | 88.6 | 161 | 1.8 |
| Example 10 | Example 5 | 190 | 162 | 28 | 85.3 | 177 | 2.5 |
| Comparative Example 5 | Comparative Example 1 | 195 | 141 | 54 | 72.3 | 207 | - |
| Comparative Example 6 | Comparative Example 2 | 181 | 133 | 48 | 73.5 | 312 | - |
| Comparative Example 7 | Comparative Example 3 | 185 | 131 | 54 | 71.0 | 401 | 5.9 |
| Comparative Example 8 | Comparative Example 4 | 189 | 140 | 49 | 74.1 | 708 | 6.1 |

From the results in Table 2, it was found that lithium ion secondary batteries comprising positive electrodes comprising the carbon materials obtained in Examples 1 to 5 had high initial charge/discharge efficiency and discharge capacity, and low DC resistance. Meanwhile, lithium-ion secondary batteries comprising positive electrodes comprising the carbon materials obtained in Comparative Examples 1 to 4 were not sufficient in at least any of the initial charge/discharge efficiency, discharge capacity, and DC resistance.

## Claims

1.   An additive for an electrochemical device positive electrode comprising a porous carbon material, wherein the porous carbon material has a pore volume of pores having a diameter of 2 nm or more of 0.25 $cm^3$/g or more, a pore volume of pores having a diameter of less than 2 nm of 0.5 $cm^3$/g or less, and an ash content of 0.5% by weight or less.

2.   The additive for an electrochemical device positive electrode according to claim 1, wherein a specific surface area of the porous carbon material in accordance with a BET method is 300 to 1600 $m^2$/g.

3.   The additive for an electrochemical device positive electrode according to claim 1 or 2, wherein a powder resistivity of the porous carbon material is 0.60 $\Omega$·cm or less.

4.   The additive for an electrochemical device positive electrode according to any one of claims 1 to 3, wherein an average particle diameter of the porous carbon material is 2 μm to 20 μm.

5. A composition for an electrochemical device positive electrode comprising the additive for an electrochemical device positive electrode according to any one of claims 1 to 4 and a positive electrode active material, wherein the content of the additive for an electrochemical device positive electrode is 10% by weight or less with respect to the total weight of the positive electrode active material.

6. The composition for an electrochemical device positive electrode according to claim 5, further comprising a binder in an amount of 0.5 to 10% by weight with respect to the total solid content weight of the composition for an electrochemical device positive electrode.

7. The composition for an electrochemical device positive electrode according to claim 5 or 6, further comprising a conductive material in an amount of 1 to 10% by weight with respect to the total solid content weight of the composition for an electrochemical device positive electrode.

8. An electrochemical device comprising a positive electrode produced by using the composition for an electrochemical device positive electrode according to any one of claims 5 to 7.

9. The electrochemical device according to claim 8, wherein the electrochemical device operates from 2 V to 5 V.

10. A lithium ion secondary battery comprising a positive electrode produced by using the composition for an electrochemical device positive electrode according to any one of claims 5 to 7.

## INTERNATIONAL SEARCH REPORT

| International application No. |
|---|
| PCT/JP2021/017081 |

### A. CLASSIFICATION OF SUBJECT MATTER
H01M 4/13(2010.01)i; H01M 4/139(2010.01)i; H01M 4/62(2006.01)i; H01G 11/42(2013.01)i; H01M 10/052(2010.01)i
FI: H01M4/62 Z; H01M4/139; H01M4/13; H01M10/052; H01G11/42
According to International Patent Classification (IPC) or to both national classification and IPC

### B. FIELDS SEARCHED

Minimum documentation searched (classification system followed by classification symbols)
H01M4/00-4/62; H01G11/42; H01M10/052

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2004-296431 A (DENSO CORP.) 21 October 2004 (2004-10-21) paragraphs [0014]-[0015], [0024], [0080]-[0083], example 1 | 1-10 |
| Y | JP 2017-108022 A (CATALER CORPORATION) 15 June 2017 (2017-06-15) paragraphs [0005], [0070], [0078]-[0089], [0103]-[0106], [0113]-[0120], table 1, fig. 4-6 | 1-2, 5-10 |
| Y | JP 2018-115106 A (BASF SE) 26 July 2018 (2018-07-26) paragraphs [0128], [0143], [0147], [0155], [0164], [0196], [0201], [0205], [0210], [0220] | 1-10 |
| Y | JP 2007-165298 A (MITSUBISHI CHEMICAL CORP.) 28 June 2007 (2007-06-28) paragraph [0093] | 1-2, 5-10 |
| Y | JP 2019-29243 A (TOYOTA MOTOR CORP.) 21 February 2019 (2019-02-21) paragraph [0034] | 7 |

☒ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 July 2021 (13.07.2021) | 27 July 2021 (27.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| | International application No. |
| --- | --- |
| | PCT/JP2021/017081 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2019-151525 A (MIKUNI COLOR CO., LTD.) 12 September 2019 (2019-09-12) paragraphs [0051]-[0052], examples 1-2, table 1 | 1-10 |
| A | US 2011/0159375 A1 (ENERG2, INC.) 30 June 2011 (2011-06-30) paragraphs [0023]-[0024] | 1-10 |
| P, X | JP 2020-68198 A (RICOH CO., LTD.) 30 April 2020 (2020-04-30) examples 22, 23, 31, paragraphs [0020]-[0025] | 1-10 |

Form PCT/ISA/210 (continuation of second sheet) (January 2015)

INTERNATIONAL SEARCH REPORT

Information on patent family members

International application No.

PCT/JP2021/017081

| Patent Documents referred in the Report | Publication Date | Patent Family | Publication Date |
|---|---|---|---|
| JP 2004-296431 A | 21 Oct. 2004 | (Family: none) | |
| JP 2017-108022 A | 15 Jun. 2017 | (Family: none) | |
| JP 2018-115106 A | 26 Jul. 2018 | US 2016/0372750 A1 paragraphs [0164], [0179], [0183], [0191], [0200], [0237], [0242], [0247], [0252], [0266] WO 2012/092210 A1 CN 103370756 A KR 10-2014-0092231 A CN 108538625 A | |
| JP 2007-165298 A | 28 Jun. 2007 | US 2010/0015514 A1 paragraph [0264] EP 1939971 A1 KR 10-2008-0056226 A CN 101292389 A KR 10-2013-0090913 A | |
| JP 2019-29243 A | 21 Feb. 2019 | (Family: none) | |
| JP 2019-151525 A | 12 Sep. 2019 | (Family: none) | |
| US 2011/0159375 A1 | 30 Jun. 2011 | WO 2011/072256 A1 specification, page 5, lines 24-27 CN 102823037 A | |
| JP 2020-68198 A | 30 Apr. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020080240 A
- JP 4964404 B
- JP 2012059690 A
- JP 2001126766 A
- JP 2014026819 A